# EUROPEAN PATENT APPLICATION

(11) **EP 3 309 544 A1**
(43) Date of publication of application: **18.04.2018**
(21) Application number: 17195929.9
(22) Date of filing: 11.10.2017
(51) Int. Cl.: G01N 29/04, G01N 29/14, G01N 29/44, B33Y 10/00

(54) **METHOD AND SYSTEM FOR IN-PROCESS MONITORING AND QUALITY CONTROL OF ADDITIVE MANUFACTURED PARTS**

(30) Priority: 11.10.2016 US 201615290078
(71) Applicant: General Electric Company, Schenectady, NY 12345 (US)
(72) Inventor: DEHGHANNIRI, Ehsan, Schenectady, NY 12345-6000 (US); KOTTILINGAM, Srikanth Chandrudu, Greenville, SC 29615 (US)
(74) Representative: Foster, Christopher Michael

(57) **Abstract**

A method (700) for in-process monitoring of a 3D manufacturing apparatus (100) or quality control of a 3D manufactured structure (140) is provided. The method (700) includes a generating step (710) that generates an acoustic wave in the 3D manufactured structure (140). A receiving step (720) receives the acoustic wave with a microphone array (160). An analyzing step (730) analyzes a frequency spectrum of the acoustic wave. A determining step (740) determines if the frequency spectrum indicates a defect in the 3D manufactured structure (140).

## Description

### BACKGROUND OF THE INVENTION

Additive manufacturing is a process by which a three-dimensional structure is built, usually in a series of layers, based on a digital model of the structure. The process is sometimes referred to as three-dimensional (3D) printing or 3D rapid prototyping, and the term "print" is often used even though some examples of the technology rely on sintering or melting/fusing by way of an energy source to form the structure, rather than "printing" in the traditional sense where material is deposited at select locations. Examples of additive manufacturing techniques include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others. Although 3D printing technology is continually developing, the process to build a structure layer-by-layer is relatively slow, with some builds taking several days to complete.

One of the disadvantages of current additive manufacturing processing relates to quality assurance. There is typically some amount of analysis to determine whether the produced part meets the manufacturing thresholds and design criteria. In some examples, the parts can be evaluated using non-destructive testing, such as computerized tomography (CT) scanning, to ensure that the part meets the design thresholds. However, in other cases the part may have to be dissected in order to test whether a certain lot of products or a sampling has satisfied the design limits. This can lead to considerable inefficiency when, for example, it is later determined that a production lot is defective due to a machining or design problem.

There have been some attempts to alleviate the aforementioned problem. In one example, for selective laser sintering, images are obtained by a camera to provide a crude estimation of the production process for the large features. Visually detectable features are utilized to determine if a part fails. However, such a system is unable to determine the root cause analysis of the failure, or to detect subsurface or hidden faults. A subsurface fault may occur when the porosity of the part is above a desired level, or when the current surface layer is fused but portions below the surface have not properly fused. An example of a hidden fault is when a crack forms during the printing process. The part is surrounded by powder, so the crack may be hidden from view, or the crack may be internal to the part and impossible to see without dissecting the part.

### BRIEF DESCRIPTION OF THE INVENTION

Assurance that a build process is progressing to plan can be important, given the resources, both in time and material, that are expended. In accordance with aspects described herein, a method is provided for in-process monitoring and quality control of additive manufactured parts or structures. The terms "parts" and "structures" will be used interchangeably and refer to items manufactured by the additive (or 3D) manufacturing apparatus.

According to one aspect, a method for in-process monitoring of a 3D manufacturing apparatus or quality control of a 3D manufactured structure is provided. The method includes a generating step that generates an acoustic wave in the 3D manufactured structure. A receiving step receives the acoustic wave with a microphone array. An analyzing step analyzes a frequency spectrum of the acoustic wave. A determining step determines if the frequency spectrum indicates a defect in the 3D manufactured structure.

According to another aspect, a method for in-process monitoring of a 3D manufacturing apparatus or quality control of a 3D manufactured structure is provided. The method includes a listening step that listens for an acoustic wave emitted by the 3D manufactured structure with a microphone array. An analyzing step analyzes a frequency spectrum of the acoustic wave. A determining step determines if the frequency spectrum indicates a defect in the 3D manufactured structure.

According to yet another aspect, a system for in-process monitoring of a 3D manufacturing apparatus or quality control of a 3D manufactured structure includes a memory and a processor in communication with the memory. The system is configured to perform, listening for an acoustic wave emitted by the 3D manufactured structure with a microphone array, analyzing a frequency spectrum of the acoustic wave and determining if the frequency spectrum indicates a defect in the 3D manufactured structure.

According to still another aspect, a computer program product for assessment of operational performance of a 3D manufacturing apparatus includes a non-transitory computer readable storage medium readable by a processor and configured for storing instructions for execution by the process to perform a method. The method includes a listening step that listens for an acoustic wave emitted by the 3D manufactured structure with a microphone array. An analyzing step analyzes a frequency spectrum of the acoustic wave. A determining step determines if the frequency spectrum indicates a defect in the 3D manufactured structure.

Additional features and advantages are realized through the concepts of aspects of the present invention. Other embodiments and aspects of the invention are described in detail herein and are considered a part of the claimed invention.

### BRIEF DESCRIPTION OF THE DRAWINGS

One or more aspects of the present invention are particularly pointed out and distinctly claimed as examples in the claims at the conclusion of the specification. The foregoing and other objects, features, and advantages of the invention are apparent from the following detailed description taken in conjunction with the accompanying drawings in which:
FIG. 1 illustrates a cross-sectional view of an additive manufacturing (or 3D manufacturing) apparatus, in accordance with aspects described herein;
FIG. 2 illustrates a bottom view of the microphone array, in accordance with aspects described herein;
FIG. 3 illustrates a diagram of how the location and direction of the sound emitted by a defect (such as a crack) is determined using the microphone array, in accordance with aspects described herein;
FIG. 4 illustrates a cross-sectional view of an additive manufacturing apparatus, in accordance with aspects described herein;
FIG. 5 illustrates a cross-sectional view of an additive manufacturing apparatus, in accordance with aspects described herein;
FIG. 6 illustrates a perspective view of a piece of the anechoic liner comprised of acoustic foam having a wedge shaped surface in accordance with aspects described herein;
FIG. 7 illustrates a flowchart of a method for in-process monitoring of a 3D manufacturing apparatus or quality control of a 3D manufactured structure/part in accordance with aspects described herein;
FIG. 8 illustrates a flowchart of a method for in-process monitoring of a 3D manufacturing apparatus or quality control of a 3D manufactured structure/part in accordance with aspects described herein;
FIG. 9 illustrates one example of a data processing system to incorporate and use one or more aspects described herein; and
FIG. 10 illustrates one example of a computer program product to incorporate one or more aspects described herein.

### DETAILED DESCRIPTION OF THE INVENTION

The phrase "additive manufacturing apparatus" is used interchangeably herein with the phrase "printing apparatus" and term "printer", and the term "print" is used interchangeably herein with the word "build", referring to the action for building a structure by an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Examples of additive manufacturing or printing processes include powder bed fusion, fused deposition modeling, electron beam melting (EBM), laminated object manufacturing, selective laser sintering (SLS), direct metal laser sintering (DMLS), direct metal laser melting (DMLM), selective laser melting (SLM), and stereolithography, among others.

Assurance that a build process is progressing as planned is important for cost and quality reasons. At the end of a build cycle to build one or more three-dimensional structures, an operator of the additive manufacturing apparatus may find that the parts or structures are defective or unusable because of an error with the additive manufacturing apparatus during the build cycle. This can be especially problematic when building expensive parts, such as molds for casting structures having complex geometries.

Operational flaws may include, as examples, errors with the build process, or additive manufacturing apparatus, or indicators that one or more errors are likely to occur with the structure(s), build process, or additive manufacturing apparatus, defects or flaws in the part/structure may include lack of fusion, undesired porosity or micro/macro cracks. In some embodiments, action(s) may be taken responsive to observing that an operational flaw has occurred. For instance, remedial actions may be taken so that the flaw can be corrected, the build process stopped, the problem fixed, a new build started, etc.

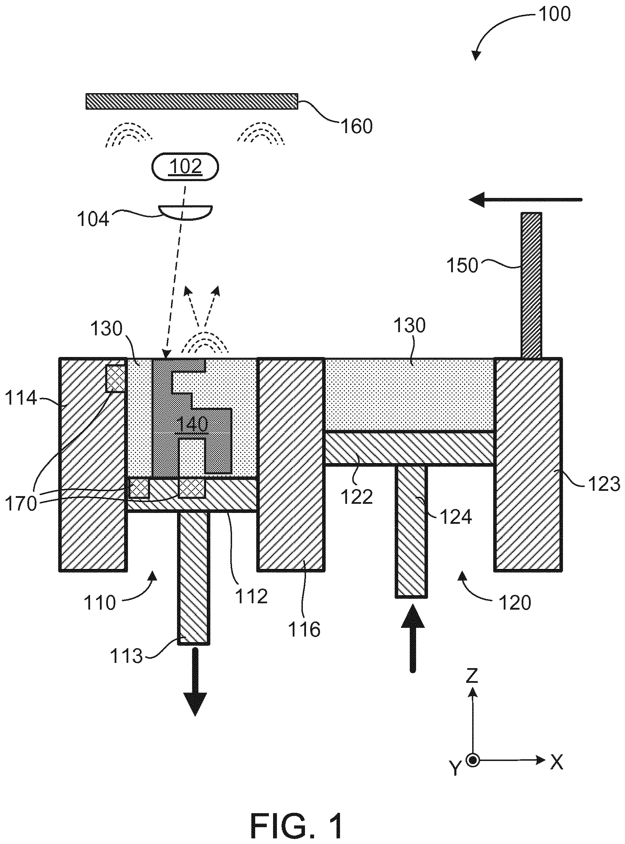

An example additive manufacturing apparatus and associated process in accordance with aspects described herein are presented with reference to FIGS. 1-5, in the context of printed parts. The parts (or structures) in this example are built out of printed metallic or ferro-magnetic material, though other materials are possible.

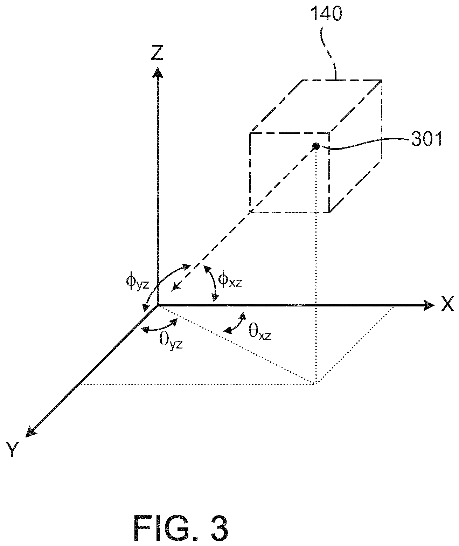

FIG. 1 depicts one example of an additive manufacturing apparatus, in accordance with aspects described herein. As is seen in FIG. 1, 3D manufacturing apparatus 100 (or a printing apparatus) is a powder bed fusion type of 3D printing device that includes a laser 102 and lens 104. A build section 110 is located adjacent to a dispensing section 120. The build section includes the build platform 112, onto which the structure 140 (e.g., the 3D manufactured structure or part) is built. The build platform is connected to a shaft or support 113 that lowers the build platform in increments as the part or structure 140 is built. At the start of 3D printing, the build platform will be at a high position, and as each layer of the structure 140 is formed the build platform will lower accordingly. The build platform 112 or build section 110 is enclosed on the sides by build section walls 114 and 116 (additional walls may be used, but are not shown).

The dispensing section 120 contains a supply of powder 130 supported by dispensing platform 122 and contained by walls 116 and 123. The dispensing platform 122 is raised up by shaft or support 124. When a new layer of powder is required in build section 110, the dispensing platform 122 will raise up by a predetermined amount so that recoating blade 150 can push the powder 130 from section 120 over to section 110. In this manner, a new layer of powder is spread over part/structure 140 so that the laser 102 may fuse the next layer of the part/structure 140. The recoating blade 150 will then return to its position above wall 123, and be ready for the next layer.

The current system has two operational modes. The first is an active mode in which an exciter/emitter generates the wave or excites the part. For in-process monitoring and quality control, a microphone array 160 is provided to receive an acoustic wave or acoustic signal from the structure/part 140. The acoustic wave is generated by an emitter 170, such as acoustic emitter, vibration device or impacting device. The emitter 170 oscillates, vibrates or impacts the wall 114 or 116, build platform 112 or directly the part 140 which causes a sonic or acoustic signal to travel into the structure 140, and the structure 140 reacts by generating an acoustic wave (e.g., having a frequency of between about 20 Hz to about 20 kHz) which may then be detected by microphone array 160. The emitter/exciter may excite the modal frequencies of the part during the build process. At different stages of the build, the modal vibration or frequencies of the part will change due to the change in its geometry, and this information can be extracted from the signals received by array 160. In industrial applications this method is known as acoustic resonance resting (ART). Any relative terms used herein (e.g., "about") are defined to give a tolerance of 10% to the stated values. The emitter 170 may be located in the wall 114 and/or wall 116, so that acoustic signals travel through the powder and into the structure 140. In one embodiment the emitter 170 can be an impactor that can move and impact the part at different locations during the build. One or more emitters 170 may also (or alternatively) be placed in or on the build platform 112, and this may enable more direct transmission on the acoustic signal into the structure(s) 140. In the second mode, the system operates in a passive mode (i.e., no emitter 170 is used) in which it measures and records sounds from parts/structures 140 continuously and in real-time to detect and locate any anomalies such as cracking during the build process.

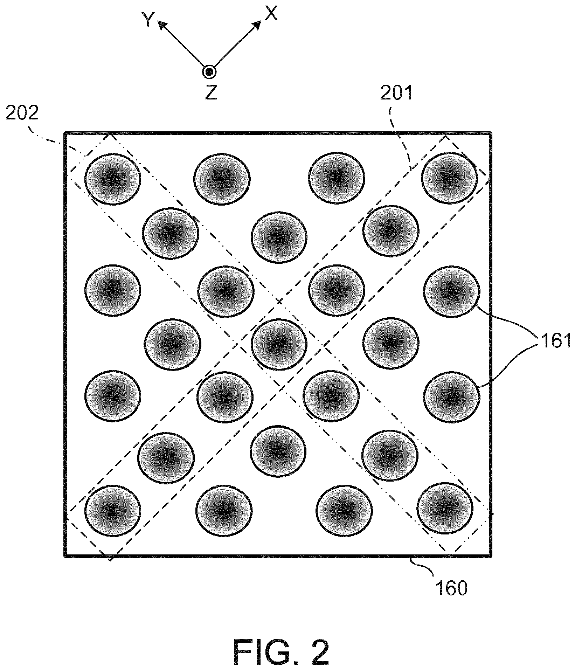

FIG. 2 illustrates a bottom view of the microphone array 160. The microphone array may be a two-dimensional array of receiving elements 161, and may be configured as a beamforming array, phased array or multi-segmented array. The phased array configuration allows for localization (3D location determination), direction of arrival (DOA) determination and range measurement (distance to the sound source) of received acoustic waves. The multi-segmented array also enables localization (3D location determination) and direction of arrival (DOA) determination, and groups of receiving elements are paired so that one group is in a first plane, and a second group is in a second plane. For example, a first group of receiving elements 201 are located in an X-Z plane, and the second group of receiving elements 202 are located in a Y-Z plane. The time of arrival (or phase) of the received acoustic wave at each receiving element can be used to determine both the direction of the incoming acoustic wave and the distance to the origin of the acoustic wave.

FIG. 3 illustrates a diagram of how the location and direction of the noise or sound emitted by a defect (such as a crack) is determined using the microphone array. The first group of receiving elements 201 are used to detect the direction of arrival of the sound, and the angle θ_{xz} determines one required piece of information. The second group of receiving elements 202 are also used to detect the direction of arrival of the noise, and the angle θ_{yz} determines another piece of information. Both receiving element groups 201, 202 can be used to detect the elevation bearing as well and these angles are φ_{xz} and φ_{yz} respectively. Combining these angles leads to the exact three-dimensional location of the origin 301 of the noise source. The origin 301 can be correlated with a specific part/structure on the build platform, so that corrective action may be undertaken on this part. The corrective action may be to stop building additional layers for this part (i.e., discard the part), stop the build and initiate pre-hot isostatic pressing (HIP) process, or to temporarily halt the build process and attempt corrective action to fix the defect.

Since all the microphones are synchronized, if an event such as crack initiation or growth happens and generates sound, the time of arrival of this pulse can be measured by at least four microphones. This time of arrival information can then be used in a triangulation to calculate x, y and z coordinates of the defect and thus locate the defect. Another approach is to use beamforming, in which the signals received by the array elements will be combined in such a way that signals at particular angles experience constructive interference while others experience destructive interference. Cross correlation of these signals with respect to varying x,y and z locations gives the defect location.

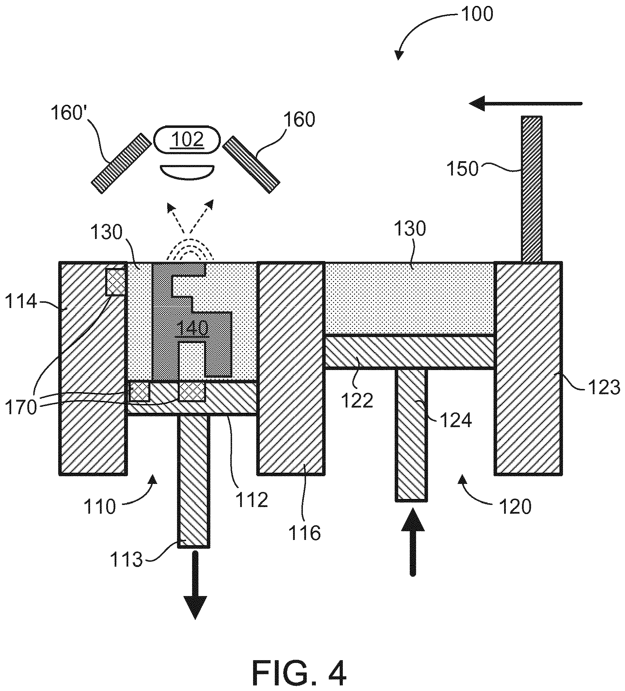

FIG. 4 illustrates a cross-sectional view of an additive manufacturing apparatus, in accordance with aspects described herein. The additive manufacturing apparatus 100 is the same as that shown in FIG. 1, except that multiple microphone arrays 160, 160' are used to receive acoustic waves from the structure/part 140 in both passive and active modes. Using multiple microphone arrays may further increase accuracy of the determination of the location of the noise (i.e., acoustic wave) emitted from the structure 140. The microphone arrays are preferably configured in a two-dimensional or three-dimensional format. A two-dimensional array may be a planar array of receiving elements, and a three-dimensional array may have the receiving elements arranged in a semi-spherical shape. However, each of the multiple microphone arrays 160, 161' may be linear arrays of receiving elements, and three, four or more microphone arrays may be used if desired.

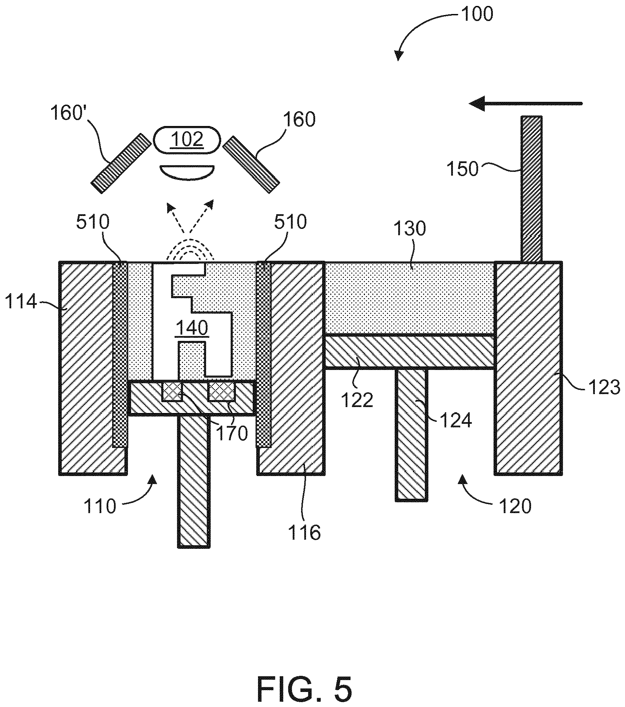

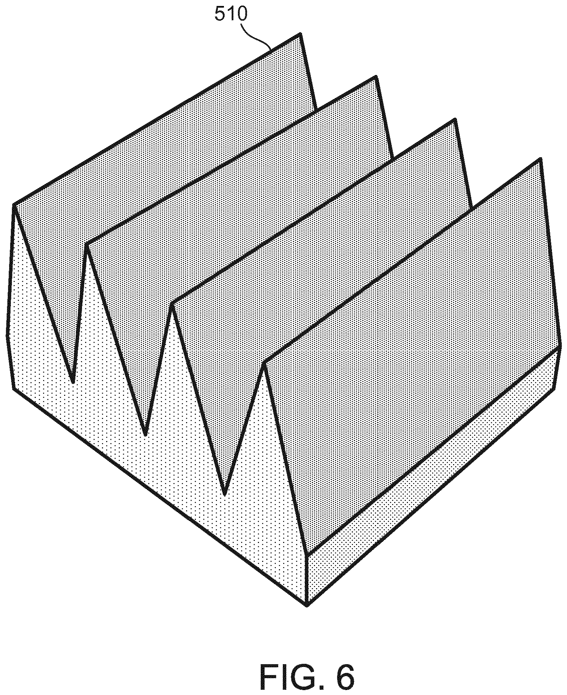

FIG. 5 illustrates a cross-sectional view of an additive manufacturing apparatus, in accordance with aspects described herein. The additive manufacturing apparatus 100 is the same as that shown in FIG. 4, except that an anechoic liner 510 is placed on the walls 114, 116 of the build chamber. The build chamber is defined by walls 114, 116 and platform 112. The anechoic liner 510 may be comprised of sound absorbing foam (e.g., a polyurethane convoluted foam) shaped to minimize sound reflections. For example, the surface of the liner 510 facing the structure 140 may be wedge shaped, pyramid shaped or have any other suitable sound absorbing shape. The foam may also be referred to as acoustic foam. FIG. 6 illustrates a perspective view of a piece of the anechoic liner 510 comprised of acoustic (e.g., sound absorbing) foam having a wedge shaped surface. This wedge shaped surface (or side) would be placed facing inward towards the structure 140 locations.

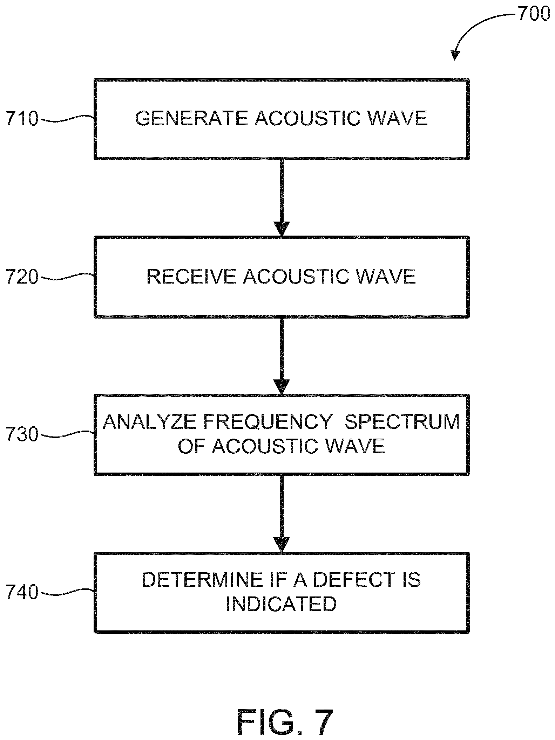

FIG. 7 illustrates a flowchart of the active mode of a method 700 for in-process monitoring of a 3D manufacturing apparatus 100 or quality control of a 3D manufactured structure/part 140, in accordance with aspects described herein. The method 700 includes a generating step 710 that generates an acoustic wave and/or excites modal vibration in the structure 140. The acoustic wave may be generated by a defect (e.g., a crack) in the structure 140, or by an external device such as acoustic emitter, vibration device or impacting device. One specific example of an acoustic emitter is an impacting device that impacts the build platform and creates a vibration. The vibration travels into structures 140 and the interaction therebetween causes the structures 140 to emit an acoustic wave. The frequency spectrum of this acoustic wave will vary based on the geometry and condition of the part. For example, a defect free part/structure at a specific build stage will have a specific frequency spectrum with peaks at certain frequencies. In contrast, a part/structure at the same build stage having a defect, such as a crack, will have a different frequency spectrum with some or all peaks offset from the defect free frequency spectrum. These differences can be detected and used to alert an operator of a defect. Although the frequency spectrum is one important and relevant feature that can be extracted from the signals, other features such as amplitude, duration and others might also be used in a statistical model to be used for evaluation of the part during the build process.

A receiving step 720 receives the acoustic wave with a microphone array 160. As stated previously, the microphone array may be a two-dimensional or three-dimensional beamforming or phased array of receiving elements. In addition, a plurality of linear or multi-dimensional microphone arrays may also be used. An analyzing step 730 analyzes the frequency spectrum of the acoustic wave emitted by the structure(s) 140. The currently received acoustic wave's frequency spectrum is compared to one or more known frequency spectrums of previously manufactured structures, known good structures and/or known bad structures (i.e., those containing a defect). If a defect is present, then the frequency spectrum of the defective structure will have an overall drop in average frequency (e.g., about 3% to about 20%), and/or peaks at different frequencies when compared to defect free structure frequency spectrums. The acoustic wave generally has a frequency range of between about 20 Hz and about 20kHz, but also includes all subranges therebetween.

A determining step 740, determines if the frequency spectrum indicates a defect in the 3D manufactured structure 140. As mentioned above, average frequency variations from known good (defect free) frequency spectrums, or spectrums having peaks at specific frequencies could indicate that a defect has occurred. If a crack occurs in the part/structure, then a sound (acoustic wave) is emitted from the part. This sound can be detected by the microphone array, and the location of the sound's origin can be used to identify the specific part containing the defect. The amplitude of sound also can be used to measure the severity of the defect. In many cases multiple parts are built at the same time and a build platform will contain a plurality of these parts/structures. In some cases, the build process can be terminated for a specific part (or all parts) if the defect is classified above a predetermined threshold.

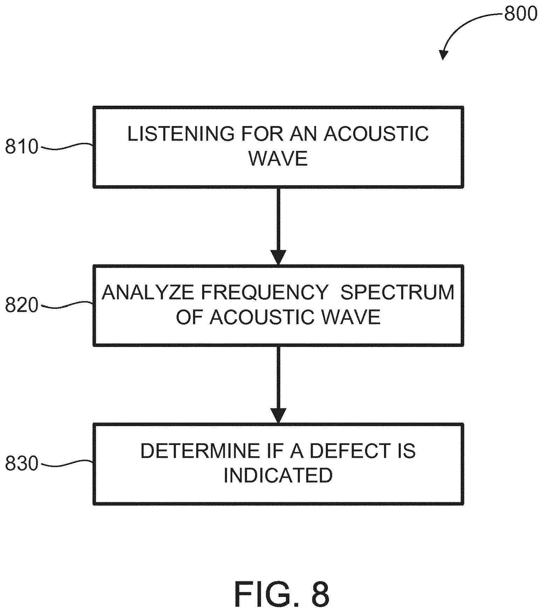

FIG. 8 illustrates a flowchart of a method 800 for in-process monitoring of a 3D manufacturing apparatus 100 or quality control of a 3D manufactured structure/part 140, in accordance with aspects described herein. Method 800 is similar to method 700, but is different in that method 800 is a passive method whereas method 700 is an active method that actively generates the acoustic wave in the structure 140. In method 800 no impacting device or other external sound/acoustic wave generating device is used. Rather, method 800 relies on the structures 140 themselves for the generation of the acoustic wave indicating a defect. If a part/structure 140 begins to crack, then an audible sound will be heard. The crack generates the sound by itself as it forms, and this sound (acoustic wave) is "heard" or detected by the microphone array.

Method 800 includes a listening step 810, that listens for an acoustic wave emitted by the 3D manufactured structure 140 with a microphone array 160. Cracks or other defects in the structure may emit a sound when the crack/defect occurs, and this defect occurrence can happen during fusion of the current layer or in previous layers. For example, as layers of the structure build up the lower or bottom layers are subjected to increased stress. This stress may be caused by thermal gradients, weight of upper layers, or just the geometry of the structure. A narrow portion of the structure will cool faster than a wider and thicker portion of the structure, and the junction between these two sections will experience a thermal gradient. However, it is to be understood that cracks or defects may occur anywhere in the part and at any time. The constant "listening" in step 810 will monitor for the occurrence of any cracks or defects. In analyzing step 820, a feature extracted from signals such as the frequency spectrum of the acoustic wave is analyzed. In determining step 830, it is determined if any of the signal features, such as the frequency spectrum, indicate a defect or crack in the structure. As described in conjunction with FIG. 7, the frequency spectrum can be compared to previously known "good" and "bad" frequency spectrums of other structures. Unexpected frequencies, lower or higher average frequencies or magnitudes of sound may indicate the presence of a defect.

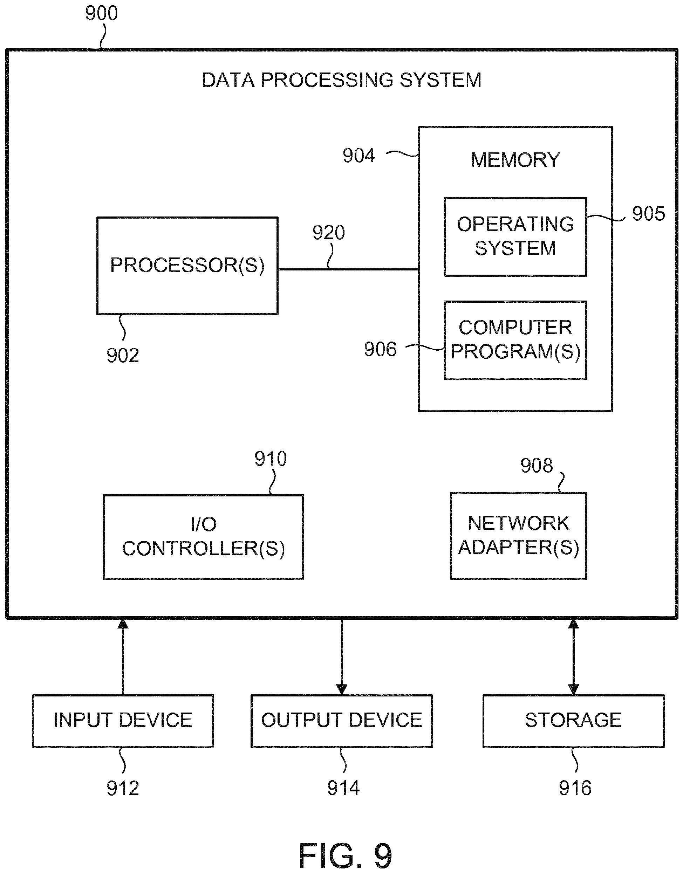

FIG. 9 illustrates one example of a data processing system to incorporate and use one or more aspects described herein. Data processing system 900 is suitable for storing and/or executing program code, such as program code for performing the processes described above, and includes at least one processor 902 coupled directly or indirectly to memory 904 through, a bus 920. In operation, processor(s) 902 obtain from memory 904 one or more instructions for execution by the processors. Memory 904 may include local memory employed during actual execution of the program code, bulk storage, and cache memories which provide temporary storage of at least some program code in order to reduce the number of times code must be retrieved from bulk storage during program code execution. A non-limiting list of examples of memory 904 includes a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Memory 904 includes an operating system 905 and one or more computer programs 906, such as one or more programs for obtaining acoustic data from the microphone array 160, and one or more programs for evaluating the obtained acoustic data to determine whether operational flaws or defects have occurred, in accordance with aspects described herein.

Input/output (I/O) devices 912, 914 (including but not limited to keyboards, displays, pointing devices, etc.) may be coupled to the system either directly or through I/O controllers 910. Network adapters 908 may also be coupled to the system to enable the data processing system to become coupled to other data processing systems through intervening private or public networks. Modems, cable modem and Ethernet cards are just a few of the currently available types of network adapters 908. In one example, network adapters 908 and/or input devices 912 facilitate obtaining scan data of a build process in which a three-dimensional structure is printed.

Data processing system 900 may be coupled to storage 916 (e.g., a non-volatile storage area, such as magnetic disk drives, optical disk drives, a tape drive, cloud storage, etc.), having one or more databases. Storage 916 may include an internal storage device or an attached or network accessible storage. Computer programs in storage 916 may be loaded into memory 904 and executed by a processor 902 in a manner known in the art.

Additionally, data processing system 900 may be communicatively coupled to the microphone array 160 via one or more communication paths, such as a network communication path, serial connection, or similar, for communicating data between data processing system 900 and the microphone array. Communication may include acquisition by the data processing system of the data acquired by the microphone array 160.

The data processing system 900 may include fewer components than illustrated, additional components not illustrated herein, or some combination of the components illustrated and additional components. Data processing system 900 may include any computing device known in the art, such as a mainframe, server, personal computer, workstation, laptop, handheld computer, tablet, smartphone, telephony device, network appliance, virtualization device, storage controller, etc. In addition, processes described above may be performed by multiple data processing systems 900, working as part of a clustered computing environment. Data processing system 900, memory 904 and/or storage 916 may include data compression algorithms specifically designed for 3D printing due to the large amount of data needed to be stored for each part.

In some embodiments, aspects of the present invention may take the form of a computer program product embodied in one or more computer readable medium(s). The one or more computer readable medium(s) may have embodied thereon computer readable program code. Various computer readable medium(s) or combinations thereof may be utilized. For instance, the computer readable medium(s) may comprise a computer readable storage medium, examples of which include (but are not limited to) one or more electronic, magnetic, optical, or semiconductor systems, apparatuses, or devices, or any suitable combination of the foregoing. Example computer readable storage medium(s) include, for instance: an electrical connection having one or more wires, a portable computer diskette, a hard disk or mass-storage device, a random access memory (RAM), read-only memory (ROM), and/or erasable-programmable read-only memory such as EPROM or flash memory, an optical fiber, a portable compact disc read-only memory (CD-ROM), an optical storage device, a magnetic storage device (including a tape device), or any suitable combination of the above. A computer readable storage medium is defined to comprise a tangible medium that can contain or store program code for use by or in connection with an instruction execution system, apparatus, or device, such as a processor. The program code stored in/on the computer readable medium therefore produces an article of manufacture (such as a "computer program product") including program code.

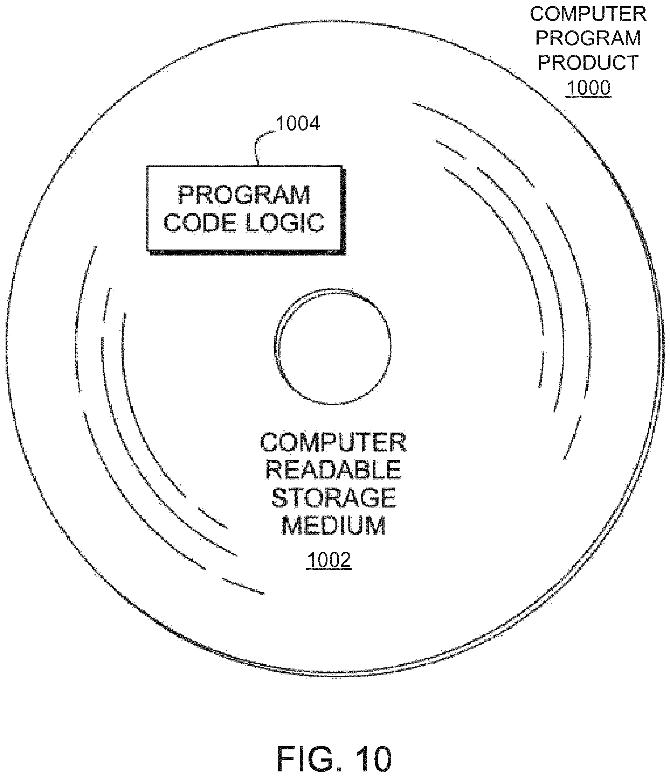

Referring now to FIG. 10, in one example, a computer program product 1000 includes, for instance, one or more computer readable media 1002 to store computer readable program code means or logic 1004 thereon to provide and facilitate one or more aspects of the present invention. Program code contained or stored in/on a computer readable medium 1002 can be obtained and executed by a data processing system (computer, computer system, etc. including a component thereof) and/or other devices to cause the data processing system, component thereof, and/or other device to behave/function in a particular manner. The program code can be transmitted using any appropriate medium, including (but not limited to) wireless, wireline, optical fiber, and/or radio-frequency. Program code for carrying out operations to perform, achieve, or facilitate aspects of the present invention may be written in one or more programming languages. In some embodiments, the programming language(s) include object-oriented and/or procedural programming languages such as C, C++, C#, Java, etc. Program code may execute entirely on the user's computer, entirely remote from the user's computer, or a combination of partly on the user's computer and partly on a remote computer. In some embodiments, a user's computer and a remote computer are in communication via a network such as a local area network (LAN) or a wide area network (WAN), and/or via an external computer (for example, through the Internet using an Internet Service Provider).

In one example, program code includes one or more program instructions obtained for execution by one or more processors. Computer program instructions may be provided to one or more processors of, e.g., one or more data processing system, to produce a machine, such that the program instructions, when executed by the one or more processors, perform, achieve, or facilitate aspects of the present invention, such as actions or functions described in flowcharts and/or block diagrams described herein. Thus, each block, or combinations of blocks, of the flowchart illustrations and/or block diagrams depicted and described herein can be implemented, in some embodiments, by computer program instructions.

The flowcharts and block diagrams depicted and described with reference to the Figures illustrate the architecture, functionality, and operation of possible embodiments of systems, methods and/or computer program products according to aspects of the present invention. These flowchart illustrations and/or block diagrams could, therefore, be of methods, apparatuses (systems), and/or computer program products according to aspects of the present invention.

In some embodiments, as noted above, each block in a flowchart or block diagram may represent a module, segment, or portion of code, which comprises one or more executable instructions for implementing the specified behaviors and/or logical functions of the block. Those having ordinary skill in the art will appreciate that behaviors/functions specified or performed by a block may occur in a different order than depicted and/or described, or may occur simultaneous to, or partially/wholly concurrent with, one or more other blocks. Two blocks shown in succession may, in fact, be executed substantially concurrently, or the blocks may sometimes be executed in the reverse order. Additionally, each block of the block diagrams and/or flowchart illustrations, and combinations of blocks in the block diagrams and/or flowchart illustrations, can be implemented wholly by special-purpose hardware-based systems, or in combination with computer instructions, that perform the behaviors/functions specified by a block or entire block diagram or flowchart.

The method and system of the present invention not only aims at in-process monitoring and quality control of 3D manufacturing apparatus and structures/parts, but is also designed to evaluate each 3D printed part/structure in real time and after the build is completed. For example, the performance of a machine might be very satisfactory, but due to material or other issues some defects occur during the build. Non-destructive testing methods that have to be done to inspect each part in the past may be eliminated using the inventive method and system, since the part/structure is inspected, monitored and assessed as it is constructed. Non-destructive testing of completed 3D parts may be undesirable because, it is very difficult to perform NDT on the parts due to complex geometry, and complex material properties, and computed tomography (CT) is very time consuming, costly and has other disadvantages. In addition, if NDT is performed after the part/structure is built, and then it is decided to scrap the part, then much time has been lost.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprise" (and any form of comprise, such as "comprises" and "comprising"), "have" (and any form of have, such as "has" and "having"), "include" (and any form of include, such as "includes" and "including"), and "contain" (and any form contain, such as "contains" and "containing") are open-ended linking verbs. As a result, a method or device that "comprises", "has", "includes" or "contains" one or more steps or elements possesses those one or more steps or elements, but is not limited to possessing only those one or more steps or elements. Likewise, a step of a method or an element of a device that "comprises", "has", "includes" or "contains" one or more features possesses those one or more features, but is not limited to possessing only those one or more features. Furthermore, a device or structure that is configured in a certain way is configured in at least that way, but may also be configured in ways that are not listed. Additionally, the terms "determine" or "determining" as used herein can include, e.g. in situations where a processor performs the determining, performing one or more calculations or mathematical operations to obtain a result.

The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiment with various modifications as are suited to the particular use contemplated.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112, sixth paragraph, unless and until such claim limitations expressly use the phrase "means for" followed by a statement of function void of further structure. It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the disclosure may include only some of the described embodiments. Accordingly, the invention is not to be seen as limited by the foregoing description, but is only limited by the scope of the appended claims. This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:
1. A method for in-process monitoring of a 3D manufacturing apparatus or quality control of a 3D manufactured structure, the method comprising:
   generating an acoustic wave in the 3D manufactured structure;
   receiving the acoustic wave with a microphone array;
   analyzing a frequency spectrum of the acoustic wave; and
   determining if the frequency spectrum indicates a defect in the 3D manufactured structure.
2. The method of clause 1, the microphone array configured as a beamforming microphone array, further comprising:
   determining a location of the defect in the 3D manufactured structure with the beamforming microphone array if a defect is detected.
3. The method of clause 2, the acoustic wave generated by an acoustic emitter forming the acoustic wave having a frequency between about 20 Hz to about 20 kHz.
4. The method of clause 2, the 3D manufacturing apparatus having an anechoic liner placed on walls of a build chamber, the anechoic liner configured to reduce acoustic wave reflections.
5. The method of clause 4, the 3D manufactured structure located on a build platform of a build section of the 3D manufacturing apparatus, the build section having one or more build section walls, the method further comprising:
   an impacting device configured for generating the acoustic wave, the impacting device in contact with the build platform or build section walls.
6. The method of clause 5, further comprising:
   comparing the frequency spectrum of the acoustic wave to one or more known frequency spectrums of previously manufactured structures; and
   terminating a build process of the 3D manufactured structure if a defect above a predetermined threshold is detected.
7. A method for in-process monitoring of a 3D manufacturing apparatus or quality control of a 3D manufactured structure, the method comprising:
   listening for an acoustic wave emitted by the 3D manufactured structure with a microphone array;
   analyzing a frequency spectrum of the acoustic wave; and
   determining if the frequency spectrum indicates a defect in the 3D manufactured structure.
8. The method of clause 7, the microphone array configured as a two-dimensional beamforming microphone array, further comprising:
   determining a location of the defect in the 3D manufactured structure with the beamforming microphone array if a defect is detected.
9. The method of clause 8, the acoustic wave generated by an acoustic emitter configured to generate the acoustic wave having a frequency between about 20 Hz to about 20 kHz.
10. The method of clause 8, the 3D manufacturing apparatus having an anechoic liner placed on walls of a build chamber, the anechoic liner configured to reduce acoustic wave reflections.
11. The method of clause 10, the 3D manufactured structure located on a build platform of a build section of the 3D manufacturing apparatus, the build section having one or more build section walls, the method further comprising:
   an impacting device configured for generating the acoustic wave, the impacting device in contact with the build platform or build section walls.
12. The method of clause 11, further comprising:
   comparing the frequency spectrum of the acoustic wave to one or more known frequency spectrums of previously manufactured structures; and
   terminating a build process of the 3D manufactured structure if a defect above a predetermined threshold is detected.
13. A system for in-process monitoring of a 3D manufacturing apparatus or quality control of a 3D manufactured structure, the system comprising:
   a memory; and
   a processor in communication with the memory, wherein the system is configured to perform:
      listening for an acoustic wave emitted by the 3D manufactured structure with a microphone array;
      analyzing a frequency spectrum of the acoustic wave; and
      determining if the frequency spectrum indicates a defect in the 3D manufactured structure.
14. The system of clause 13, the microphone array configured as a two-dimensional beamforming microphone array, so that a location of the defect in the 3D manufactured structure is determined with the beamforming microphone array if a defect is detected.
15. The system of clause 14, wherein the acoustic wave is generated by an acoustic emitter configured to generate the acoustic wave having a frequency between about 20 Hz to about 20 kHz.
16. The system of clause 14, the 3D manufacturing apparatus having an anechoic liner placed on walls of a build chamber, the anechoic liner configured to reduce acoustic wave reflections.
17. The system of clause 16, the 3D manufactured structure located on a build platform of a build section of the 3D manufacturing apparatus, the build section having one or more build section walls, the system further comprising:
   an impacting device configured for generating the acoustic wave, the impacting device in contact with the build platform or build section walls.
18. The system of clause 16, the 3D manufactured structure located on a build platform of a build section of the 3D manufacturing apparatus, the system further comprising:
   an impacting device configured for generating the acoustic wave, the impacting device located in or on the build platform.
19. The system of clause 13, wherein the system is configured to perform:
   comparing the frequency spectrum of the acoustic wave to one or more known frequency spectrums of previously manufactured structures; and
   terminating a build process of the 3D manufactured structure if a defect above a predetermined threshold is detected.
20. A computer program product for assessment of operational performance of a 3D manufacturing apparatus, the computer program product comprising:
   a non-transitory computer readable storage medium readable by a processor and storing instructions for execution by the process to perform a method comprising:
      listening for an acoustic wave emitted by the 3D manufactured structure with a microphone array;
      analyzing a frequency spectrum of the acoustic wave; and
      determining if the frequency spectrum indicates a defect in the 3D manufactured structure.

## Claims

1. A method (700) for in-process monitoring of a 3D manufacturing apparatus (100) or quality control of a 3D manufactured structure (140), the method (700) comprising:
generating (710) an acoustic wave in the 3D manufactured structure (140);
receiving (720) the acoustic wave with a microphone array (160);
analyzing (730) a frequency spectrum of the acoustic wave; and
determining (740) if the frequency spectrum indicates a defect in the 3D manufactured structure (140).

2. The method (700) of claim 1, wherein the microphone array (160) is configured as a beamforming microphone array (160), the method (700) further comprising:
determining a location of the defect in the 3D manufactured structure (140) with the beamforming microphone array (160) if a defect is detected.

3. The method (700) of claim 1 or 2, wherein the acoustic wave is generated by an acoustic emitter (170) forming the acoustic wave having a frequency between about 20 Hz to about 20 kHz.

4. The method (700) of any one of claims 1 to 3, wherein the 3D manufacturing apparatus (100) having an anechoic liner (510) is placed on walls (114, 116) of a build chamber (110), the anechoic liner (510) being configured to reduce acoustic wave reflections.

5. The method (700) of any one of claims 1 to 4, wherein the 3D manufactured structure (140) is located on a build platform (112) of a build section (110) of the 3D manufacturing apparatus (100), the build section (110) having one or more build section walls (114, 116), the method (700) further comprising:
an impacting device (170) configured for generating the acoustic wave, the impacting device (170) in contact with the build platform (112) or build section walls (144, 116).

6. The method (700) of any one of claims 1 to 5, further comprising:
comparing the frequency spectrum of the acoustic wave to one or more known frequency spectrums of previously manufactured structures (140); and
terminating a build process of the 3D manufactured structure (140) if a defect above a predetermined threshold is detected.

7. A method (800) for in-process monitoring of a 3D manufacturing apparatus (100) or quality control of a 3D manufactured structure (140), the method (800) comprising:
listening (810) for an acoustic wave emitted by the 3D manufactured structure (140) with a microphone array (160);
analyzing (820) a frequency spectrum of the acoustic wave; and
determining (830) if the frequency spectrum indicates a defect in the 3D manufactured structure (140).

8. The method (800) of claim 7 wherein the microphone array (160) is configured as a two-dimensional beamforming microphone array (160), the method (800) further comprising:
determining a location of the defect in the 3D manufactured structure (140) with the beamforming microphone array (160) if a defect is detected.

9. The method (800) of claim 7 or 8 wherein the acoustic wave is generated by an acoustic emitter (170) configured to generate the acoustic wave having a frequency between about 20 Hz to about 20 kHz.

10. The method (800) of any one of claims 7 to 9 wherein the 3D manufacturing apparatus (100) having an anechoic liner (510) is placed on walls (114, 116) of a build chamber (110) and the anechoic liner (510) is configured to reduce acoustic wave reflections.

11. The method (800) of any one of claims 7 to 10 wherein the 3D manufactured structure (140) is located on a build platform (112) of a build section (110) of the 3D manufacturing apparatus (100), the build section (110) having one or more build section walls (114, 116), the method (800) further comprising:
an impacting device (170) configured for generating the acoustic wave, the impacting device (170) in contact with the build platform (112) or build section walls (114, 116).

12. The method (800) of any one of claims 7 to 11, further comprising:
comparing the frequency spectrum of the acoustic wave to one or more known frequency spectrums of previously manufactured structures (140); and
terminating a build process of the 3D manufactured structure (140) if a defect above a predetermined threshold is detected.

13. A system (900) for in-process monitoring of a 3D manufacturing apparatus (100) or quality control of a 3D manufactured structure (140), the system (900) comprising:
a memory (904); and
a processor (902) in communication with the memory (904), wherein the system (900) is configured to perform:
listening (810) for an acoustic wave emitted by the 3D manufactured structure (140) with a microphone array (160);
analyzing (820) a frequency spectrum of the acoustic wave; and
determining (830) if the frequency spectrum indicates a defect in the 3D manufactured structure (140).

14. The system (900) of claim 13, wherein the microphone array (160) is configured as a two-dimensional beamforming microphone array (160), so that a location of the defect in the 3D manufactured structure (140) is determined with the beamforming microphone array (160) if a defect is detected.

15. The system (900) of claim 13 or 14, wherein the acoustic wave is generated by an acoustic emitter (170) configured to generate the acoustic wave having a frequency between about 20 Hz to about 20 kHz.
